# EUROPEAN PATENT APPLICATION

(11) **EP 2 455 805 A2**
(43) Date of publication of application: **23.05.2012**
(21) Application number: 11189082.8
(22) Date of filing: 15.11.2011
(51) Int. Cl.: G02F 1/167, G09G 3/34, G09F 9/33

(54) **High efficiency electronic display device and display system using the same**

(30) Priority: 18.11.2010 US 949768
(71) Applicant: Star-Reach Corp., New Taipei City 235 (TW)
(72) Inventor: Yen, Chih-Chien, 235 New Taipei City (TW)
(74) Representative: Becker Kurig Straus

(57) **Abstract**

A display system includes an EPD and LED matrix with electrophortetic display elements (EPDs) and light emitting display elements (LEDs) of the same numbers, and each of the EPDs is paired with a corresponding one of the LEDs. An LED driver and an EPD driver are used to drive the LEDs and EPDs respectively according as an environment in which the display system is located is in a daytime mode or a nighttime mode. A central control unit is adapted for turning off the LEDs and using only the EPDs for display when the display system is in the daytime mode, and using both the LEDs and EPDs for display when the display system is in the nighttime mode.

## Description

### BACKGROUND

### Field of Invention

The present invention relates to a high efficiency electronic display device, and especially to the display device consisting of the EPD (Electrophortetic Display Element) and LED (Light-Emitting Diode) matrix.

### Description of Related Art

The electrophoretic display elements, called E-paper traditionally, are becoming more mature in the field of electronic display equipment. The characteristics of E-paper display technology includes low power consumption rate, thin thickness of 0.1 mm, display of self-maintained contents, non-self-luminescence, etc., wherein the characteristic of low power consumption rate applying onto information display equipment may be a great advantage, and such equipment being operated based on a battery without other power sources shall save a great cost. Thus, the traditional LED display may be a disadvantage. In addition, the equipment for EPD having the features of lightweight and small size may be installed anywhere very easily, and this is superior to the prior arts.

On the contrary, the main weakness of the equipment constructed end is non-self-luminescence. Therefore, at least one light source may be a necessity in a dark place or at night, and the characteristic of low power consumption rate shall be lost. In the present situation, the sites for applying EPD are then restricted.

The inventor of the present invention has developed the technology related to the electronic display equipment for a long time and thus produced the device of the present invention. It is to combine the display equipment with EPD and LED, and hence the device is able to display information by means of EPD in the daytime and LED light at night. The total amount of LED and related components of the device is 1/10 of the LED display traditionally used. Therefore, the difference between the two devices is huge, because LEDs of the device of the present invention may be installed in the places where LED should be at night. Compared with the EPD lighted by external light source, the present device is capable of saving 50-80% energy,

LED only light up the area where EPD display, and other areas without the LED need to have contrast luminance comparing with the LED light for promoting the light effect. As aforesaid, the high efficiency electronic display device only needs 1/10 of the amount of LED and related components of traditional LED display, and further, the device weight of the present invention is totally different.

The present device is not suitable for use in display equipment with small size and more display points per square unit. Generally, a display point of 10 mm in diameter may be acceptable, but other smaller display points may be involved in the present invention.

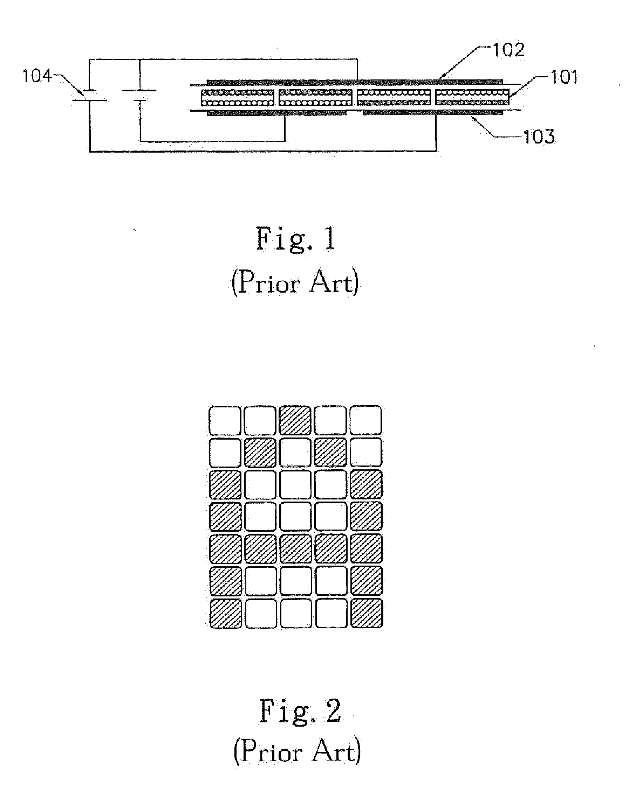

Please refer to FIG. 1, which is a side view of an EPD structure in prior arts. Two electrodes 102 and 103 are disposed on two sides of an electrophoretic material 101 and are connected to a voltage 104, and thus can attract or repel charged particles with different colors, and a display unit is thus composed. FIG. 2 is a sketch for an EPD display in prior arts, wherein slashed areas represent dark pixels, which forms a character "A".

### SUMMARY

The present invention mainly provides a high efficiency electronic display device, which is related to a like electronic paper display equipment made by EPDs and LEDs, and is featured in displaying information by using EPD in the daytime and by using LED light while not having enough light.

According to an aspect of the present invention disclosed herein, a display system includes an EPD and LED matrix, an LED driver, an EPD driver and a central control unit. The EPD and LED matrix includes electrophortetic display elements (EPDs) and light emitting display elements (LEDs) of the same numbers, and each of the EPDs is paired with a corresponding one of the LEDs. The LED driver and EPD driver are used to drive the LED and EPDs respectively according as an environment in which the display system is located is in a daytime mode or a nighttime mode. The central control unit is adapted for turning off the LED and using only the EPDs to display when the display system is in the daytime mode; and using both the LEDs and EPDs to display when the display system is in the nighttime mode.

Accord to another embodiment disclosed herein, the central control unit is further adapted for controlling the EPDs paired with the unemitting LEDs, to be darker than the EPDs paired with the emitting LEDs, when the display system is in the nighttime mode.

Accord to another embodiment disclosed herein, the display system further includes a power generating unit for generating power.

Accord to another embodiment disclosed herein, the power generating unit is a solar power generator.

Accord to another embodiment disclosed herein, the power generating unit is a wind power generator.

Accord to another embodiment disclosed herein, the display system further includes a battery for storing power generated by the power generating unit and for supplying the power to the EPD and LED matrix.

Accord to another embodiment disclosed herein, the display system further includes a radio frequency module for receiving contents to be displayed on the EPD and LED matrix.

Accord to another embodiment disclosed herein, the EPD and LED matrix further includes an upper electrode, a lower electrode and a printed circuit board. The upper electrode and lower electrode are disposed at two different levels. The printed circuit board is disposed closer to a first level along which the lower electrode is disposed than to a second level along which the upper electrode is disposed, wherein the EPDs and the LEDs are disposed between the upper electrode and the lower electrode. A plurality of holes are formed through the upper electrode and the lower electrode, and are disposed among the EPDs for exposing the LEDs. Each of the LEDs is mounted on the printed circuit board and extends through each of the holes and protrudes out of a level along which the upper electrode is disposed,

Accord to another embodiment disclosed herein, the EPD and LED matrix further includes an upper electrode, a lower electrode and a printed circuit board. The printed circuit board is disposed closer to the lower electrode than to the upper electrode, wherein the EPDs and the LENDS are disposed between the upper electrode and the lower electrode. A plurality of holes are formed through the upper electrode and the lower electrode, and are disposed among the EPDs for exposing the LEDs. Each of the LENDS is mounted on the printed circuit board and extends through each of the holes and protrudes out of a level along which the upper electrode is disposed.

Accord to another embodiment disclosed herein, the display system further includes an arc-shaped reflector disposed adjacent to each of the LED for directing light to a corresponding one of the EPDs.

Accord to another embodiment disclosed herein, the display system further includes a light sensor for detecting that the display system is in the daytime mode or the nighttime mode.

Accord to another embodiment disclosed herein, the central control unit is further adapted for receiving information from the light sensor and sending control instructions to the LED driver and the EPD driver.

Accord to another embodiment disclosed herein, the EPD and LED matrix further includes an upper electrode, a lower electrode and a printed circuit board. The upper electrode and the lower electrode are disposed at two different levels. The printed circuit board is disposed closer to a first level along which the lower electrode is disposed than to a second level along which the upper electrode is disposed, wherein the EPDs and the LEDs are disposed between the upper electrode and the lower electrode. A plurality of holes are formed through the upper electrode and the lower electrode, and are disposed among the EPDs for exposing the LEDs. Each of the LEDs is mounted on the printed circuit board and extends through each of the holes and protrudes out of a level along which the upper electrode is disposed.

Accord to another embodiment disclosed herein, the display system further includes an are-shaped reflector disposed adjacent to each of the LEDs for directing light to a corresponding one of the EPDS.

It is to be understood that both the foregoing general description and the following detailed description are by examples, and are intended to provide further explanation of the invention as claimed.

### BRIEF DESCRIPTION OF THE DRAWINGS

The accompanying drawings are included to provide a further understanding off the invention, and are incorporated in and constitute a part of this specification. The drawings illustrate embodiments of the invention and, together with the description, serve to explain the principles of the invention. In the drawings,
FIG. 1 is a side view of an EPD structure in prior arts;
FIG. 2 is a sketch for an EPD display in prior arts;
FIG. 3A illustrates a cross-sectional view of a high efficiency electronic display device with EPD and LED according to an embodiment of the present invention;
FIG. 3B illustrates a cross-sectional view of a high efficiency electronic display device with EPD and LED according to another embodiment of the present invention;
I~IG. 4 illustrates a sketch of the high efficiency electronic display system with EPD and LED according to an embodiment of the present invention;
FIG. 5 illustrates a display system functional block diagram according to an embodiment of the present invention;
Fig. 6 illustrates a sketch of the high efficiency electronic display system with EPD and LED according to another embodiment of the present invention; and
FIG. 7 illustrates a cross-sectional view of a high efficiency electronic display device with EPD and LED according to still another embodiment of the present invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts,

To make it easier for the examiner to understand the objectives of the invention, structure, innovative features, and performance, a preferred embodiment is used together with the attached drawings for the detailed description of the invention.

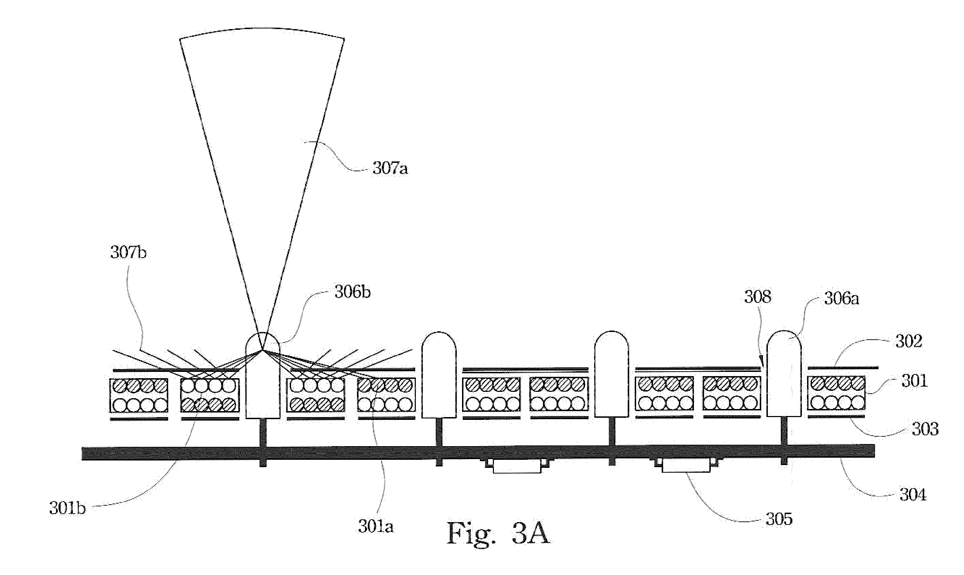

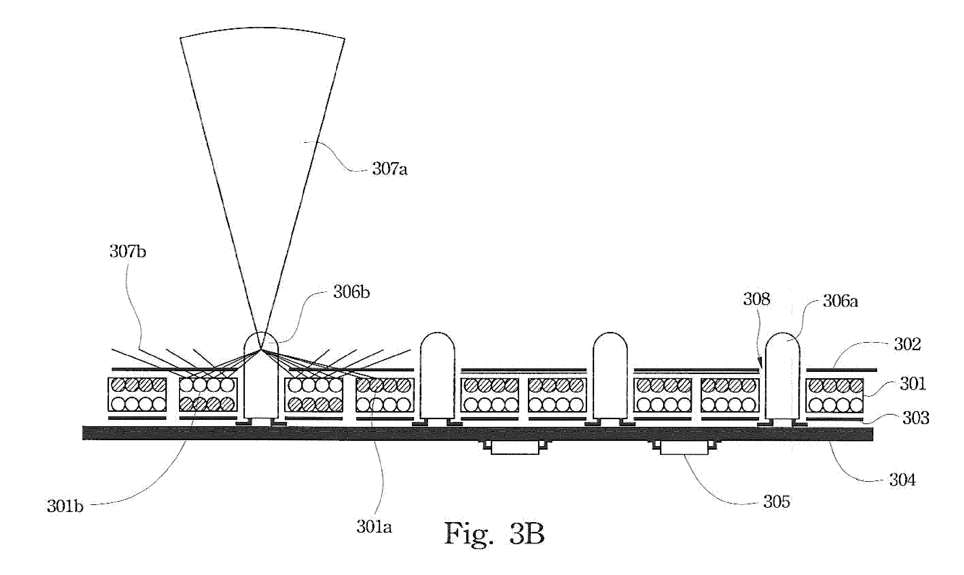

Referring to both FIG. 3A and FIG. 3B, Fig. 3A is a cross-sectional view of a high efficiency electronic display device with EPD and LED according to an embodiment of the present invention, and FIG. 3B is a cross-sectional view of a high efficiency electronic display device with EPD and LED according to another embodiment of the present invention. The LEDs (306a, 306b) in FIG. 3A are DIP LEDs (dual-in-line package LEDs) while the LEDs (306a, 306b) in FIG. 3B are SMD (Surface Mount Device) LEDs. Basically, the display device comprises a plurality of EPDs 301, an upper electrode 302, a lower electrode 303, a plurality of LEDs (306a, 306b), an LED PCB (Printed Circuit Board) 304 and a plurality of controlling elements 305. The LED PCB 304 is closer to the lower electrode 303 than the upper electrode 302, and the EPDs 301 and LEDs (306a, 306b) are located between the upper electrode 302 and the lower electrode 303. A plurality of holes 308 are formed through the upper electrode 302 and the lower electrode 303, and are disposed among the EPDs 301 for exposing the LEDs (306a, 306b). Each of the LED (306a, 306b) is mounted on the LED PCB 304 and extends through each of the holes 308, and protrudes out of a level along which the upper electrode 302 is disposed. A thickness of the EPD 301 is less than 0.1 mm. A display matrix is composed of the EPDs 301, an upper electrode 302, a lower electrode 303, and has the holes 308 to easily expose the LEDs (306a, 306b). The LED PCB 304 includes the controlling elements 305 for controlling the LEDs (306a, 306b) and the EPDs 301 either simultaneously or separately, based on the appropriate level of emitted light, e,g., the level of light needed for daylight use (primarily using EPD to display) as compared with the level of light needed for night use (including LED emitted light). Therefore, the whole device is constructed by a simple and fast way, but with high efficiency.

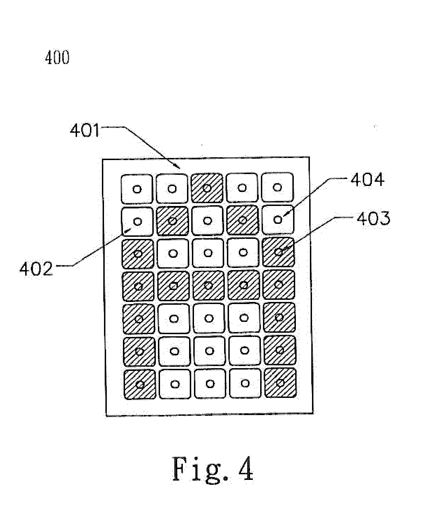

FIG. 4 is a sketch of the high efficiency electronic display device with EPD and LED off the present invention. In this embodiment, there are 5X7 EPD figure factors (402, 404) in a display device 401 including LED 403. In Fig. 4, it is assumed that the shaded figure (as a reversed condition) illuminates an English character "A" during the daytime, the brightness is adequate for the information to be illuminated by the EPD figure factors (402, 404). When the brightness is inadequate or at night, each EPD is illuminated by its paired LED 403.

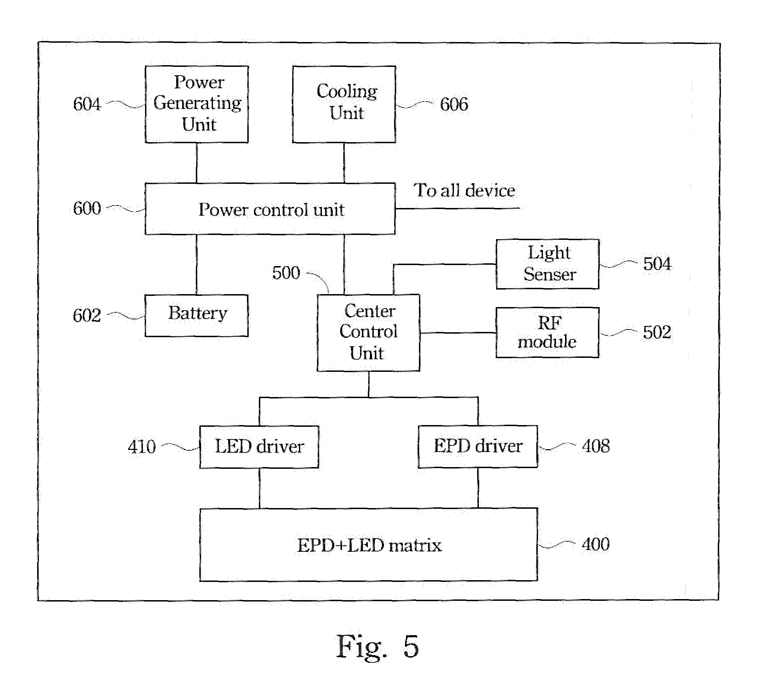

FIG. 5 illustrates a display system block diagram according to an embodiment off the present invention. The display system basically includes an EPD and LED matrix 400, which includes electrophortetic display elements (EPDs) and light emitting display elements (LEDs) of the same numbers. Each of the EPDs is paired with a corresponding one of the LEDs (as illustrated in Fig. 4). A light sensor 504 may be installed in this display system for deciding that an environment where the display system is located is in a daytime mode (adequate brightness mode) or a nighttime mode (inadequate brightness mode). However, the light sensor 504 is not an essential element in this display system because the daytime mode or the nighttime mode can also be decided by other ways or devices, eg., a voltage level of a solar power generator or a timetable. A radio frequency module 502 may be installed in this display system for receiving a content to be displayed on the EPD and LED matrix from a remote content supplier. An LED driver 410 and an EPD driver 408 receive commands from a central control unit 500 and drive the LEDs and EPDs respectively according to the daytime mode or the nighttime mode. For example, when the light sensor 504 senses that the display system is in the daytime mode, the LED driver 410 turns off all the LEDs, and only the EPD driver 408 is used to drive EPDs for display such that the display system consumes little power in the daytime mode. When the light sensor 504 senses that the display system is in the nighttime mode, both the LED driver 410 and EPD driver 408 are used to respectively drive EPDs and LEDs for display.

The display system may include a power management system, which includes a power control unit 600, a power generating unit 604, a cooling unit 606 and a power generating unit 604. A power generating unit 604 is used to generate power by converting solar radiation or wind into electricity, such that the power generating unit 604 can be a solar power generator or a wind power generator. Taking the solar power generator as a power generating unit for the display system as an example for explanation, the solar power generator produces electricity in the daytime, Since all the LEDs are turned off in the daytime and the EPDs require little power, most power can be saved in the battery 602 for the LEDs' operation in the nighttime, which consumes larger power. The cooling unit 606 is used to dissipate heat of the power management system. The power control unit 600 is connected to all electrical components (e.g., the EPD and LED matrix etc.) within the display system, and supplies with power.

Because the LEDs do not consume power in the daytime and only consume power in the nighttime, the display system consumes about 1/10 power of a display system consisting of all pure LEDs. The EPDs consume little power in the nighttime and daytime. Therefore, only using a solar power generator or a wind power generator can supply enough power for the display system's normal operation. The display system can be installed within a desert or a wildness area, e.g., being located beside a high way through the desert.

Referring to FIG. 3A, FIG. 3B, FIG. 4 and FIG. 5, when the light sensor 504 senses that the display system is in the nighttime mode, the central control unit 500 is further adapted for controlling the EPDs (e.g., the EPDs 301a in FIG. 3A or Fig. 3B) paired with the unemitting LEDs the LED 306a in FIG. 3A or FIG. 3B) to be darker than the EPDs (e.g., EPDs 301b in FIG. 3A or FIG. 3B) paired with the emitting LEDs (e.g., LED 306b in FIG. 3A or FIG. 3B), so as to enhance a display contrast ratio of the EPD and LED matrix 400. That is, the EPDs (e.g., the EPDs 301b in FIG. 3A or FIG. 3B) paired with the emitting LEDs (e.g., LED 306b in FIG. 3A or FIG. 3B) are driven to be brighter than the EPDs (e.g., EPDs 301a in FIG. 3A or FIG. 3B) paired with the unemitting LEDs (e.g., LED 306a in FIG. 3A or FIG. 3B). Because the brighter EPDs (e.g., EPDs 301b in FIG. 3A or FIG. 3B) can reflect light beams 307b from the emitting LEDs 306b and add up to the light beams 307a, the paired EPD 301b and LED 306b is even brighter than the paired EPD 301a and LED 306a, thereby increasing a contrast ratio of the EPD and LED matrix 400. With this regard, the EPD and LED matrix 400 can be more readable in the nighttime.

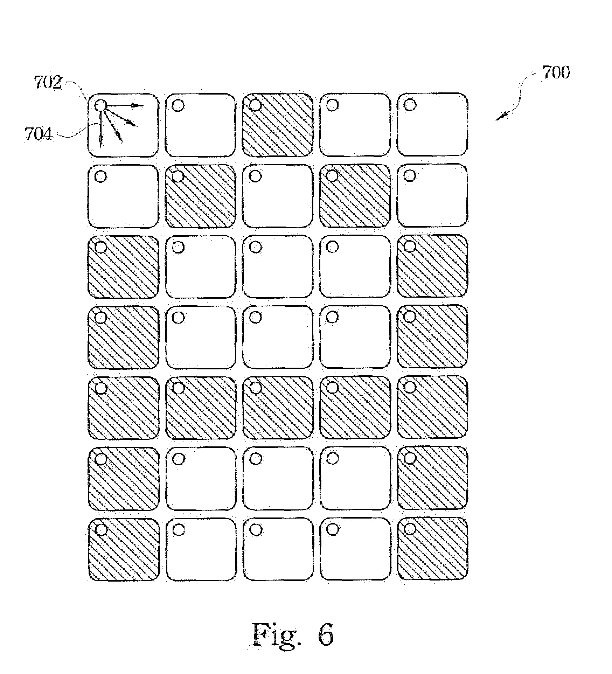

Fig. 6 illustrates a sketch of the high efficiency electronic display system with EPD and LED according to another embodiment of the present invention. This embodiment is different from the embodiment of Fig. 4 in the position of each LED. In the display system 700, each LED 702 is located at a corner of each EPD area 704, rather than located at a central of each EPD area, i.e., as illustrated in Fig. 4.

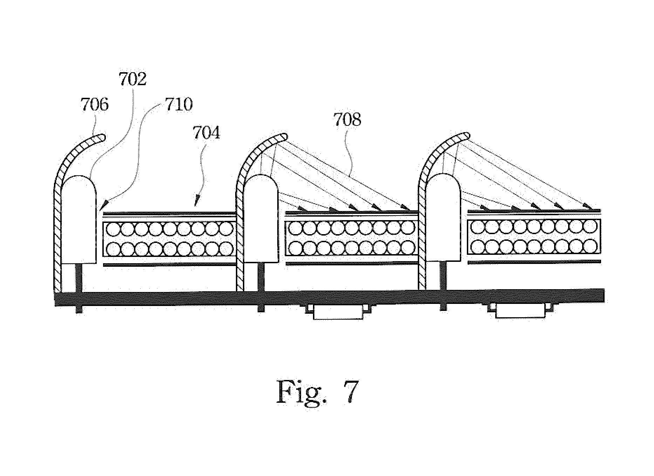

FIG. 7 illustrates a cross-sectional view of a high efficiency electronic display device with EPD and LED according to still another embodiment of the present invention. When each LED 702 is located at a corner of each EPD area 704, an arc-shaped reflector 706 may be installed adjacent to each LED 702 for directing light beams 708 towards each corresponding EPD 704. The arc-shaped reflector 706 extends through a hole 710 of each EPD area 704, and its arc-bent portion directs light beams 708 towards each corresponding EPD 704. With this regard, the EPD and LED matrix 700 can have a better display quality. In an alternate embodiment, a side-emitting LED can be used to replace the LED 702 and the arc-shaped reflector 706 can be omitted.

While the invention has been described by way of example and in terms of a preferred embodiment, it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures. It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A display system comprising:
a EPD and LED matrix comprising electrophortetic display elements (EPDs) and light emitting display elements (LEDs) of the same numbers, and each of the EPDs is paired with a corresponding one of the LEDs;
an LED driver and an EPD driver for driving the LEDs and EPDs respectively according as an environment in which the display system is located is in a daytime mode or a nighttime mode; and
a central control unit adapted for:
turning off the and using only the EPDs for display when the display system is in the daytime mode; and
using both of the LEDs and EPDs for display when the display system is in the nighttime mode.

2. The display system of claim 1, wherein the central control unit is further adapted for controlling the EPDs paired with the unemitting LEDs to be darker than the EPDs paired with the emitting LEDs, when the display system is in the nighttime mode.

3. The display system of claim 1, further comprising a power generating unit for generating power,

4. The display system of claim 3, further comprising a battery for storing power generated by the power generating unit and for supplying the power to the EPD and LED matrix.

5. The display system of claim 3, wherein the power generating unit is a solar power generator.

6. The display system of claim 3, wherein the power generating unit is a wind power generator.

7. The display system off claim 1, further comprising a radio frequency module for receiving contents to be displayed on the EPD and LED matrix.

8. The display system of claim 1, wherein the EPD and LED matrix further comprises:
an upper electrode and a lower electrode disposed at two different levels;
a printed circuit board disposed closer to a first level along which the lower electrode is disposed than to a second level along which the upper electrode is disposed, wherein the EPDs and the LEDs are disposed between the upper electrode and the lower electrode; and
a plurality of holes which are formed through the upper electrode and lower electrodes, and are disposed among the plurality of EPDs for exposing the LEDs,
wherein each of the LEDs is mounted on the printed circuit board and extends through each of the holes, and protrudes out of the second level along which the upper electrode is disposed.

9. The display system of claim 8, further comprising an arc-shaped reflector disposed adjacent to each of the LEDs for directing light to a corresponding one of the EPDs.

10. The display system of claim 1, further comprising a light sensor for detecting that the display system is in the daytime mode or the nighttime mode.

11. The display system of claim 10, wherein the central control unit is further adapted for receiving information from the light sensor and sending control instructions to the LED driver and the EPD driver.

12. The display system of claim 1, wherein the EPD and LED matrix further comprises:
an upper electrode and a lower electrode; and
a printed circuit board disposed closer to the lower electrode than to the upper electrode, wherein the EPDs and the LEDs are disposed between the upper electrode and the lower electrode;
a plurality of holes which are formed through the upper electrode and lower electrodes, and are disposed among the plurality of EPDs for exposing the LEDs,
wherein each of the LENDS is mounted on the printed circuit board and extends through each of the holes, and protrudes out of a level along which the upper electrode is disposed.

13. The display system of claim 12, further comprising an arc-shaped reflector disposed adjacent to each of the LEDs for directing light to a corresponding one of the EPDs.
